(19) Europäisches Patentamt
European Patent Office
Office européen des brevets

(11) **EP 4 585 659 A1**

(12) **EUROPEAN PATENT APPLICATION**
published in accordance with Art. 153(4) EPC

(43) Date of publication:
**16.07.2025 Bulletin 2025/29**

(21) Application number: **23863152.7**

(22) Date of filing: **04.09.2023**

(51) International Patent Classification (IPC):
*C09J 7/30* (2018.01)      *B32B 27/00* (2006.01)
*B32B 27/38* (2006.01)      *C09J 11/04* (2006.01)
*C09J 11/06* (2006.01)      *C09J 133/00* (2006.01)
*C09J 163/02* (2006.01)      *C09J 163/04* (2006.01)
*C09J 201/00* (2006.01)

(52) Cooperative Patent Classification (CPC):
**B32B 27/00; B32B 27/38; C09J 7/30; C09J 11/04; C09J 11/06; C09J 133/00; C09J 163/00; C09J 163/04; C09J 201/00**

(86) International application number:
**PCT/JP2023/032263**

(87) International publication number:
**WO 2024/053614 (14.03.2024 Gazette 2024/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.09.2022 JP 2022140657**

(71) Applicant: **Dai Nippon Printing Co., Ltd.**
**Tokyo 162-8001 (JP)**

(72) Inventors:
• **KANTANI, Masakatsu**
  **Tokyo 162-8001 (JP)**
• **SAKURAYAMA, Takao**
  **Tokyo 162-8001 (JP)**
• **ITO, Hiroyuki**
  **Tokyo 162-8001 (JP)**
• **SAKURAI, Reiko**
  **Tokyo 162-8001 (JP)**
• **YOSHINO, Nobuhiro**
  **Tokyo 162-8001 (JP)**

(74) Representative: **Beck Greener LLP**
**Fulwood House**
**12 Fulwood Place**
**London WC1V 6HR (GB)**

(54) **ADHESIVE SHEET, ADHESIVE AGENT COMPOSITION, AND STRUCTURE**

(57) The present disclosure provides an adhesive sheet to be used for adhering a first member and a second member, a tensile elastic modulus of the first member is smaller than a tensile elastic modulus of the second member; a breaking elongation of the adhesive sheet is 60% or more; a tensile elastic modulus of the adhesive sheet after cured is the tensile elastic modulus of the first member or more; and a tensile shearing adhesive strength of the adhesive sheet after cured is 10 MPa or more.

FIG. 1

**Description**

Technical Field

The present disclosure relates to an adhesive sheet, an adhesive agent composition, and a structure.

Background Art

An adhesive agent that adheres two members is used in various fields. In recent years, the development of an adhesive agent to be used for adhering different materials has been advanced. As such an adhesive agent, an epoxy resin-based adhesive agent is suggested in, for example, Patent Document 1 and Patent Document 2.

Citation List

Patent Documents

Patent Document 1: Japanese Patent No. 5888349
Patent Document 2: Japanese Patent No. 6067828

Summary

Technical Problem

In a structure including a curable adhesive layer configured by a cured product of an adhesive agent composition between two adherends formed of different materials, strain may occur in the curable adhesive layer due to outer force and temperature change. At this time, when the strain of the curable adhesive layer is large, positional shifting of the adherends may occur in the structure.

For example, regarding a strain sensor, when the strain sensor is adhered to a measurement target object by an adhesive agent, if the strain in the curable adhesive layer is large, there is a problem that the strain cannot be accurately measured. Also, when the strain sensor is adhered to a strain body by an adhesive agent, if the strain in the curable adhesive layer is large, there is a problem that the strain cannot be accurately measured. This may be a cause of malfunction.

Also, in a stream of sizing down and multi-functionalizing of electronic device in recent years, further densification of an electronic component has been required. For this reason, in a component built-in substrate, along with the high densification of the electronic component, high positional accuracy is required. However, in the component built-in substrate, when the electronic component is adhered by an adhesive agent, if the strain in the curable adhesive layer is large, there are risks that the electronic component may be shifted and tilted. The shifting and tilting of the electronic component may be a cause of short circuit, which degrades the reliability of interlayer connection and the insulating property.

The present disclosure has been made in view of the above circumstances, and a main object thereof is to provide an adhesive sheet and an adhesive agent composition with which the positional shifting of an adherend due to strain in a curable adhesive layer can be inhibited.

Solution to Problem

One embodiment of the present disclosure provides an adhesive sheet of which tensile elastic modulus after cured is 3.5 GPa or more, and a tensile shearing adhesive strength of the adhesive sheet after cured is 10 MPa or more.

Another embodiment of the present disclosure provides an adhesive sheet of which breaking elongation is 60% or more, wherein the adhesive sheet contains an epoxy resin, an acryl resin, a curing agent, and an inorganic filler; the epoxy resin includes a bisphenol A-type epoxy resin, and a three functional or more epoxy resin; and a content of the inorganic filler is 30.0 mass% or more and 68.0 mass% or less.

Another embodiment of the present disclosure provides an adhesive sheet to be used for adhering a first member and a second member, wherein a tensile elastic modulus of the first member is smaller than a tensile elastic modulus of the second member; a breaking elongation of the adhesive sheet is 60% or more; a tensile elastic modulus of the adhesive sheet after cured is the tensile elastic modulus of the first member or more; and a tensile shearing adhesive strength of the adhesive sheet after cured is 10 MPa or more.

Another embodiment of the present disclosure provides an adhesive sheet to be used for adhering a first member and a second member, wherein a tensile elastic modulus of the first member is smaller than a tensile elastic modulus of the second member; a main material of the first member is a polyimide-based resin; the adhesive sheet contains an epoxy resin, an acryl resin, a curing agent, and an inorganic filler; the epoxy resin includes a bisphenol A-type epoxy resin, and a three functional or more epoxy resin; and a content of the inorganic filler is 30.0 mass% or more and 68.0 mass% or less.

Another embodiment of the present disclosure provides an adhesive agent composition to be used for adhering a first member and a second member, wherein a tensile elastic modulus of the first member is smaller than a tensile elastic modulus of the second member; a main material of the first member is a polyimide-based resin; the adhesive agent composition contains an epoxy resin, an acryl resin, a curing agent, and an inorganic filler; the epoxy resin includes a bisphenol A-type epoxy resin, and a three functional or more epoxy resin; and a content of the inorganic filler in a solid content of the adhesive agent composition is 30.0 mass% or more and 68.0 mass% or less.

Another embodiment of the present disclosure provides a structure including a first member, a second member, and a curable adhesive layer that adheres the first member and the second member, wherein the first member is a resin member; a tensile elastic modulus of the curable adhesive layer is 3.5 GPa or more; and a tensile shearing adhesive strength of the curable adhesive layer is 10 MPa or more.

Advantageous Effects

The present disclosure provides an adhesive sheet and an adhesive agent composition with which a positional shifting of an adherend due to strain in a curable adhesive layer can be inhibited.

Brief Description of Drawings

FIG. 1 is a schematic cross-sectional view illustrating an example of an adhesive sheet in the present disclosure.
FIG. 2 is a schematic cross-sectional view illustrating an example of a structure in the present disclosure.

Description of Embodiments

Embodiments in the present disclosure are hereinafter explained with reference to, for example, drawings. However, the present disclosure is enforceable in a variety of different forms, and thus should not be taken as is limited to the contents described in the embodiments exemplified as below. Also, the drawings may show the features of the invention such as width, thickness, and shape of each part schematically in order to explain the invention more clearly in some cases comparing to the actual form; however, it is merely an example, and thus does not limit the interpretation of the present disclosure. Also, in the present description and each drawing, for the factor same as that described in the figure already explained, the same reference sign is indicated and the explanation thereof may be omitted.

In the present descriptions, in expressing an aspect wherein some member is placed on the other member, when described as merely "on" or "below", unless otherwise stated, it includes both of the following cases: a case wherein some member is placed directly on or directly below the other member so as to be in contact with the other member, and a case wherein some member is placed on the upper side or the lower side of the other member via yet another member. Furthermore, in the present description, upon expressing an aspect of arranging the other member in a surface of one member, when expressed simply "in a surface", both of when the other member is directly arranged on or below the one member so as to contact with each other, and when the other member is arranged on or below the one member further interposing an additional member, can be included unless otherwise described.

Also, in the present descriptions, a member referred to as "film" is included in "sheet". Also, a member referred to as "sheet" is included in "film".

The adhesive sheet, the adhesive agent composition and the structure in the present disclosure will be hereinafter described in details.

A. Adhesive sheet

The adhesive sheet in the present disclosure has four embodiments. In the following, each embodiment will be explained.

I. First embodiment of adhesive sheet

The first embodiment of the adhesive sheet in the present disclosure is an adhesive sheet to be used for adhering a first member and a second member, wherein a tensile elastic modulus of the first member is smaller than a tensile elastic modulus of the second member; a breaking elongation of the adhesive sheet is 60% or more; a tensile elastic modulus of the adhesive sheet after cured is the tensile elastic modulus of the first member or more; and a tensile shearing adhesive strength of the adhesive sheet after cured is 10 MPa or more.

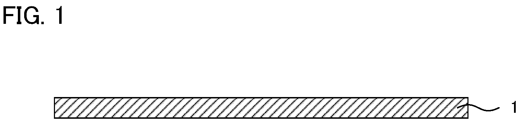

FIG. 1 is a schematic cross-sectional view exemplifying the adhesive sheet of the present embodiment. The adhesive sheet 1 of the present embodiment includes, as exemplified in FIG. 1, usually only an adhesive layer. The adhesive sheet 1 includes specified properties.

In the present embodiment, in the adhesive sheet to be used for adhering a first member and a second member, when a tensile elastic modulus of the first member is smaller than a tensile elastic modulus of the second member, a tensile elastic modulus of the adhesive sheet after cured is the tensile elastic modulus of the first member or more, and thus the rigidity of the adhesive sheet after cured can be improved. Thus, in a structure including a curable adhesive layer configured by a cured product of the adhesive sheet between the first member and the second member, strain caused in the curable adhesive layer due to outer force and temperature change can be reduced. Thereby, occurrence of positional shifting of the first member with respect to the second member due to the strain in the curable adhesive layer can be inhibited.

Here, as an example of measures to improve the rigidity of the adhesive sheet after cured, adding an inorganic filler is considered. However, by adding the inorganic filler, the elongation of the adhesive sheet and the adhesive strength after cured tend to decrease. When the elongation of the adhesive sheet is low, processability is degraded, and thus, a crack or a breakage may occur at, for example, the time of cutting the adhesive sheet.

In contrast, in the present embodiment, the breaking elongation of the adhesive sheet is the specified value or more, and a tensile shearing adhesive strength of the adhesive sheet after cured is the specified value or more. Therefore, the adhesive strength of the adhesive sheet after cured can be improved and the processability can be improved while improving the rigidity after cured.

Each constitution of the adhesive sheet of the present embodiment will be hereinafter described.

1. Properties of adhesive sheet

(1) Breaking elongation

The breaking elongation of the adhesive sheet of the present embodiment is 60% or more, preferably 100% or more, and more preferably 200% or more. When the breaking elongation is in the above range, the processability can be improved. Meanwhile, when the breaking elongation is too small, there is a possibility that a crack or a breakage may occur at, for example, the time of cutting the adhesive sheet. Also, the breaking elongation may be, for example, 1000% or less, may be 500% or less, and may be 300% or less. When the breaking elongation is too large, there is a possibility that the adhesive sheet may be too soft and it may be difficult to handle. In specific, the breaking elongation is, 60% or more and 1000% or less, may be 100% or more and 500% or less, and may be 200% or more and 300% or less.

Here, the breaking elongation of the adhesive sheet is measured in accordance with JIS K7127:1999. Specific measurement conditions are shown below. As a tensile tester, for example, "Tensilon RTF1150" from A & D Company, Ltd. is used.

<Measurement conditions>

- Test piece: a rectangle having 15 mm width, 150 mm length
- Distance between chucks: 100 mm
- Tensile speed: 100 mm/min
- Temperature: 23°C
- Humidity: 50%RH

Also, the breaking elongation is obtained by the following equation.

$$\text{Breaking elongation (\%)} = (L - L_0) / L_0 * 100$$

(In the equation, $L_0$ is a test piece length before the tensile test, and L is a test piece length at the time of breaking.)

Examples of a method for controlling the breaking elongation of the adhesive sheet may include a method to include an acryl resin in the adhesive sheet when the adhesive sheet contains an epoxy resin-based adhesive agent. The acryl resin improves toughness and increases the breaking elongation of the adhesive sheet.

(2) Tensile elastic modulus after cured

The tensile elastic modulus of the adhesive sheet of the present embodiment after cured is the tensile elastic modulus of the first member or more, and preferably larger than the tensile elastic modulus of the first member. In the present specification, the tensile elastic modulus of the first member refers to a tensile elastic modulus of a main material of the first member. In other words, the tensile elastic modulus of the adhesive sheet of the present embodiment after cured is the tensile elastic modulus of the main material of the first member or more, and preferably larger than the tensile elastic modulus of the main material of the first member. Thereby, the rigidity of the adhesive sheet after cured can be improved. Thus, in a structure including a curable adhesive layer configured by a cured product of the adhesive sheet between the first member and the second member, when strain occurs in the curable adhesive layer due to outer force and temperature change, the strain in the curable adhesive layer can be reduced. Thereby, occurrence of positional shifting of the first member with respect to the second member caused by the curable adhesive layer can be inhibited.

Also, the tensile elastic modulus of the adhesive sheet of the present embodiment after cured may be the tensile elastic modulus of the first member or more, and for example, may be the tensile elastic modulus of the second member or less, and may be the tensile elastic modulus of the second member or more. In the present specification, the tensile elastic modulus of the second member refers to a tensile elastic modulus of a main material of the second member. In other words, the tensile elastic modulus of the adhesive sheet of the present embodiment after cured may be the tensile elastic modulus of the main material of the first member or more, and for example, may be the tensile elastic modulus of the main material of the second member or less, and may be the tensile elastic modulus of the main material of the second member or more.

Note that the tensile elastic modulus of the adhesive sheet after cured refers to both the tensile elastic modulus of MD direction and the tensile elastic modulus of TD direction.

The MD direction refers to a flow direction of the adhesive sheet during its production. The TD direction refers to a vertical direction with respect to the MD direction. For example, when the adhesive sheet is long shape, the MD direction designates the length direction of the adhesive sheet, and the TD direction designates the width direction of the adhesive sheet.

Here, the tensile elastic modulus of the adhesive sheet after cured is measured in accordance with JIS K7127:1999. Specific measurement conditions are shown below. As a tensile tester, for example, "Tensilon RTF1150" from A & D Company, Ltd. is used.

<Measurement conditions>

- Test piece: a rectangle having 15 mm width, 150 mm length
- Distance between chucks: 100 mm
- Tensile speed: 1 mm/min
- Temperature: 23°C
- Humidity: 50%RH

Also, on the occasion of measuring the tensile elastic modulus of the adhesive sheet after cured, the curing conditions of the adhesive sheet are appropriately set depending on the material of the adhesive sheet.

The main material of the first member varies depending on the constitution of the first member. For example, when the first member is configured by a single member, the main material of the first member refers to a main component of the single member. Also, for example, when the first member is configured by a plurality of members, the main material of the first member refers to the member with the smallest tensile elastic modulus among the tensile elastic modulus of the main component of each member. Note that the main component refers to a component which is included the most.

The main material of the second member varies depending on the constitution of the second member. For example, when the second member is configured by a single member, the main material of the second member refers to a main component of the single member. Also, for example, when the second member is configured by a plurality of members, the main component of the second member refers to the member with the smallest tensile elastic modulus among the tensile elastic modulus of the main component of each member. Note that the main component refers to a component which is included the most.

The tensile elastic modulus of the main material of the first member varies depending on the constitution of the first member. For example, when the first member is configured by a single member, the tensile elastic modulus of the main material of the first member refers to a tensile elastic modulus of a main component of the single member. Also, for example, when the first member is configured by a plurality of members, the tensile elastic modulus of the main material of the first member refers to the smallest tensile elastic modulus among the tensile elastic modulus of the main component of each member.

Also, the tensile elastic modulus of the main material of the second member varies depending on the constitution of the second member. For example, when the second material is configured by a single member, the tensile elastic modulus of the main material of the second member refers to a tensile elastic modulus of a main component of the single member. Also, for example, when the second member is configured by a plurality of members, the tensile elastic modulus of the main material of the second member refers to the smallest tensile elastic modulus among the tensile elastic modulus of the main component of each member.

As the tensile elastic modulus of the main material of the first member and the tensile elastic modulus of the main material of the second member, literature values are adopted. For example, literature values descried in "Chronological scientific tables" (Maruzen Publishing Co., Ltd.) and Mechanical engineering journal (The Japan Society of Mechanical Engineers) can be adopted. Note that the tensile elastic modulus is also called a young modulus.

As a reference, the tensile elastic modulus (young modulus) of a part of materials is shown.

Polyimide-based resin: 3.5 GPa to 4.5 GPa
Aluminum alloy: 65 GPa to 80 GPa
Glass epoxy: 20 GPa to 30 GPa

Incidentally, as an analyzing method of materials configuring the first member, a general analyzing method can be applied, and appropriately selected depending on materials. Analyzing method of materials configuring the second member is the same.

The tensile elastic modulus of the adhesive sheet of the present embodiment after cured may be the tensile elastic modulus of the main material of the first member or more, and is appropriately set depending on the tensile elastic modulus of the main material of the first member.

For example, when the main material of the first member is a polyimide-based resin, the tensile elastic modulus of the adhesive sheet after cured is, for example, preferably 3.5 GPa or more, more preferably 4.0 GPa or more, and further preferably 5.0 GPa or more.

For example, when the main material of the first member is a polyester resin, the tensile elastic modulus of the adhesive sheet after cured is, for example, preferably 3.0 GPa or more, more preferably 3.5 GPa or more, and further preferably 4.0 GPa or more.

Also, the upper limit of the tensile elastic modulus of the adhesive sheet of the present embodiment after cured is not particularly limited, but for example, it is 30 GPa or less, may be 20 GPa or less, and may be 10 GPa or less. In specific, when the main material of the first member is a polyimide-based resin, the tensile elastic modulus of the adhesive sheet after cured is preferably 3.5 GPa or more and 30 GPa or less, more preferably 4.0 GPa or more and 20 GPa or less, and further preferably 5.0 GPa or more and 10 GPa or less. Also, in specific, when the main material of the first member is a polyester resin, the tensile elastic modulus of the adhesive sheet after cured is, for example, preferably 3.0 GPa or more and 30 GPa or less, more preferably 3.5 GPa or more and 20 GPa or less, and further preferably 4.0 GPa or more and 10 GPa or less.

Examples of a method for controlling the tensile elastic modulus of the adhesive sheet after cured may include a method of including an inorganic filler and a method of adjusting a cross-linking density of the adhesive sheet after cured.

The inorganic filler can increase the tensile elastic modulus of the adhesive sheet after cured.

In the method of adjusting the cross-linking density of the adhesive sheet after cured, when the cross-linking density increases, the tensile elastic modulus tends to increase. Examples of a method for adjusting the cross-linking density of the adhesive sheet after cured may include a method of including a multi-functional resin component.

(3) Tensile shearing adhesive strength after cured

The tensile shearing adhesive strength of the adhesive sheet of the present embodiment after cured is 10 MPa or more, more preferably 15 MPa or more, and further preferably 20 MPa or more. When the tensile shearing adhesive strength is in the above range, excellent adhesiveness is obtained. Also, there is no particular limitation on the upper limit of the tensile shearing adhesive strength.

Here, the tensile shearing adhesive strength of the adhesive sheet after cured is measured in accordance with JIS K6850:1999. As an adherend material, a cold rolled steel sheet (SPCC-SD) with standard refining, surface finish D, having a thickness of 25 mm and a size of 100 mm * 16 mm is used. Also, as a tensile tester, for example, "Tensilon RTF1350" from A & D Company, Ltd. is used. Specific measurement conditions are shown below.

<Measurement conditions>

- Test piece: 187.5 mm length, 25 mm width
- Tensile speed: 10 mm/min
- Temperature: 23°C
- Humidity: 50%RH

Examples of a method for controlling the tensile shearing adhesive strength of the adhesive sheet after cured may include a method of adjusting the cross-linking density of the adhesive sheet after cured. When the cross-linking density increases, the tensile shearing adhesive strength tends to increase. Examples of a method for adjusting the cross-linking density of the adhesive sheet after cured may include a method of including a multi-functional resin component.

(4) Peak value of loss coefficient (tan$\delta$) after cured

The peak value of the loss coefficient (tan$\delta$) of the adhesive sheet of the present embodiment after cured is, for example, preferably 120°C or more, may be 130°C or more, and may be 150°C or more. When the peak value of the tan$\delta$ is in the above range, heat resistance can be improved. Also, the peak value of the tan$\delta$ is, for example, 250°C or less, may be 230°C or less, and may be 200°C or less. In specific, the peak value of the tan$\delta$ is 120°C or more and 250°C or less, may be 130°C or more and 230°C or less, and may be 150°C or more and 200°C or less.

Here, the tan$\delta$ of the adhesive sheet after cured is measured by a dynamic viscoelasticity measurement (DMA) in accordance with JIS K7244--1:1998, and obtained from the following equation:

Loss coefficient (tan$\delta$) = loss elastic modulus (M")/ storage elastic modulus (M').

As a dynamic viscoelasticity measurement device, for example, "RSA-III" from TA Instruments is used. Specific measurement conditions are shown below.

<Measurement conditions>

- Attachment mode: compression mode
- Frequency: 1 Hz
- Temperature: -50°C to 300°C
- Temperature rising speed: 5°C/min

Incidentally, when there are plurality of peaks of tan$\delta$, the peak value of tan$\delta$ designates the one at higher temperature.

Examples of a method for controlling the peak value of tan$\delta$ of the adhesive sheet after cured may include a method of adjusting a cross-linking density of the adhesive sheet after cured. When the cross-linking density increases, the peak value of tan$\delta$ tends to increase. Examples of a method for adjusting the cross-linking density of the adhesive sheet after cured may include a method of including a multi-functional resin component.

2. Materials of adhesive sheet

The adhesive sheet of the present embodiment preferably contains a thermosetting adhesive agent. The thermosetting adhesive agent may be applied even when the first member and the second member do not have transparency.

The adhesive sheet of the present embodiment preferably contains an epoxy resin-based adhesive agent. In specific, the adhesive sheet of the present embodiment preferably contains an epoxy resin and a curing agent. In general, the epoxy resin-based adhesive agent has hard and tough cured layer, and is suitable for adhering members with hard materials such as a metal member and a glass member. Also, the epoxy resin-based adhesive agent is generally excellent in properties such as heat resistance, insulating property and chemical resistance, and curing shrinkage is small, and thus it may be used in a wide variety of applications.

Above all, the adhesive sheet of the present embodiment preferably contains an epoxy resin, a curing agent, an acryl resin, and an inorganic filler. When the acryl resin in included, toughness improves, and thus the breaking elongation tends to increase. Also, when the inorganic filler is included, strength improves, and thus the tensile elastic modulus after cured tends to increase.

In particular, it is preferable that the epoxy resin includes a three functional or more epoxy resin. When the three functional or more epoxy resin is included, the cross-linking density after cured improves, and thus the tensile elastic modulus after cured and the tensile shearing adhesive strength after cured tend to increase.

(1) Epoxy resin

The epoxy resin is a compound including at least one or more epoxy group or glycidyl group, and cured by causing a cross-linking polymerization reaction by being used in combination with a curing agent. The epoxy resin also includes a monomer including at least one or more epoxy group or glycidyl group.

Examples of the epoxy resin may include an aromatic epoxy resin, an aliphatic epoxy resin, an alicyclic epoxy resin, and a heterocyclic epoxy resin. Specific examples may include a bisphenol type epoxy resin, a novolac-type epoxy resin, a modified epoxy resin, a biphenyl type epoxy resin, a stilbene type epoxy resin, a triphenol methane type epoxy resin, an alkyl-modified triphenol methane type epoxy resin, a triazine nucleuscontain epoxy resin, a dicyclopentadiene-modified phenol type epoxy resin, and a naphthalene type epoxy resin. Examples of the bisphenol type epoxy resin may include a bisphenol A-type epoxy resin, and a bisphenol F type epoxy resin. Examples of the novolac-type epoxy resin may include a bisphenol A novolac-type epoxy resin, a phenol novolac-type epoxy resin, and a cresol novolac-type epoxy resin. Examples of the modified epoxy resin may include a urethane modified epoxy resin and a rubber modified epoxy resin. The epoxy resin may be one kind, and may be two kinds or more.

Among them, the bisphenol type epoxy resin is preferable, and the bisphenol A-type epoxy resin is more preferable. When a rigid epoxy resin having a bisphenol skeleton is included, the heat resistance can be improved.

The bisphenol A-type epoxy resin may be present in a liquid state at ordinary temperature or in a solid state at ordinary temperature according to the number of repeating units of the bisphenol skeleton. For example, the bisphenol A-type epoxy resin wherein the bisphenol skeleton of the main chain is 0 or more and 1 or less is liquid at ordinary temperature. Also, the bisphenol A-type epoxy resin wherein the bisphenol skeleton of the main chain is 2 or more and 10 or less is solid at ordinary temperature.

Epoxy resin may include, as the bisphenol A-type epoxy resin, only the bisphenol A-type epoxy resin which is solid at ordinary temperature, and may include only the bisphenol A-type epoxy resin which is liquid at ordinary temperature, and may include the bisphenol A-type epoxy resin which is solid at ordinary temperature and the bisphenol type epoxy resin which is liquid at ordinary temperature.

The bisphenol A-type epoxy resin which is solid at ordinary temperature rapidly melts at a temperature of the melting point or more, and changes to liquid with low viscosity. For this reason, on the occasion of adhering the first member and the second member, when the adhesive agent composition is closely adhered to the first member and the second member and solidified by heating, the adhesive agent composition is strongly adhered to the first member and the second member, and also, since such a bisphenol A-type epoxy resin has high cross-linking density after cured, the mechanical strength increases, the chemical resistance improves, the curability improves, and the hygroscopicity decreases (since free volume decreases). As the result, the adhesive strength after cured can be improved.

Also, when the bisphenol A-type epoxy resin which is solid at ordinary temperature and the bisphenol type epoxy resin which is solid at ordinary temperature are used in combination, flexibility and formability can be improved while maintaining the mechanical strength.

The epoxy resin preferably includes, as described above, a three functional or more epoxy resin as well as the bisphenol A-type epoxy resin.

Examples of the three functional or more epoxy resin may include an epoxy resin having a tris(hydroxyphenyl) methane structure, an epoxy resin having a tetrakis(hydroxyphenyl)ethane structure, an epoxy resin having an aminophenol structure, and an epoxy resin having a bis(aminophenyl)methane structure.

The content ratio of the bisphenol A-type epoxy resin and the three functional or more epoxy resin is, for example, in a mass basis, 1 : 1 to 3 : 1, and may be 75 : 65 to 115 : 65. When the content ratio is in the above range, after cured, the adhesive strength at ordinary temperature improves, and the adhesive strength under high temperature hot water environment also improves.

The epoxy resin preferably includes a phenol novolac-type epoxy resin as well as the bisphenol A-type epoxy resin, and the three functional or more epoxy resin. When the phenol novolac-type epoxy resin is included, heat resistance can be improved.

The content ratio of the bisphenol A-type epoxy resin and the phenol novolac-type epoxy resin is, for example, in a mass basis, 100 : 50 to 100 : 20, and may be 100 : 40 to 100 : 30.

The content of the epoxy resin is, for example, with respect to a total amount 100 mass parts of resin component, 40 mass parts or more and 90 mass parts or less. Note that the resin component includes later described epoxy modified silicone resin and acryl resin other than the epoxy resin.

(2) Epoxy modified silicone resin

The adhesive sheet of the present embodiment may contain an epoxy modified silicone resin. When the epoxy modified silicone resin is included, water resistance can be improved. Also, both heat resistance and flexibility (toughness) can be achieved.

The epoxy modified silicone resin refers to one in which an epoxy group or an epoxy compound is introduced to a part of a silicone resin. The silicone resin is a compound having a polyorganosiloxane skeleton. In the silicone resin, usually, a main skeleton (main chain) part is configured by a repetition of an organosiloxane unit, and the main skeleton is a compound including at least one silanol group. The epoxy modified silicone resin is obtained by the addition reaction of this silanol group and the epoxy compound. The main skeleton of the silicone resin may include a branched structure if at least one silanol group is included. Also, the epoxy modified silicone resin may be a reaction product of the epoxy resin and the silicone resin. For example, the epoxy modified silicone resin may be the one formed by a reaction of an OH group in the epoxy resin skeleton with silanol. Incidentally, in the reaction product, even the one with more epoxy resins and appearing that silicone is hanging down from the epoxy resin, it is regarded as the epoxy modified silicone resin. The epoxy modified silicone resin may be used alone, and two kinds or more may be used in combination.

Examples of the epoxy modified silicone resin may include a partial condensate of an epoxy modified silane compound. Examples of the epoxy modified silane compound may include γ-glycidoxypropyltrimethoxysilane, γ-glycidoxypropyltriethoxysilane, 2-(3,4-epoxysiclohexyl)ethyltrimethoxysilane, 2-(3,4-epoxysiclohexyl)ethyltriethoxysilane, (γ-glycidoxypropyl) (methyl)dimethoxysilane, (γ-glycidoxypropy) (ethyl)dimethoxysilane, (γ-glycidoxypropyl) (methyl) diethoxysilane, (γ-glycidoxypropyl) (ethyl)dimethoxysilane , (γ-glycidoxypropyl) (ethyl)diethoxysilane , [2-(3,4-epoxysiclohexyl)ethyl] (methyl) dimethoxysilane, [2- (3,4-epoxysiclohexyl)ethyl] (ethyl)dimethoxysilane, [2-(3,4-epoxysiclohexyl)ethyl] (methyl)diethoxysilane, [2-(3,4-epoxysicloohexyl)ethyl] (ethyl)diethoxysilane, (γ-glycidoxypropyl) (methoxy)dimethylsilane, (γ-glycidoxypropyl)methoxy)diethylsilane, (γ-glycidoxypropyl)(ethoxy)diethylsilane, [2-(3,4-epoxysiclohexyl)ethyl] (methoxy)dimethylsilane, [2-(3,4-epoxysiclohexyl)ethyl](methoxy)diethylsilane, [2-(3,4-epoxysiclohexyl)ethyl] (ethoxy)dimethylsilane, and [2-(3,4-epoxysiclohexyl)ethyl](ethoxy)diethylsilane. The epoxy modified silicone resin may be used alone, and two kinds or more may be used in combination.

The content of the epoxy modified silicone resin is, for example, with respect to the total amount 100 mass parts of the resin component, 5 mass parts or more and 40 mass parts or less.

(3) Acryl resin

The adhesive sheet of the present embodiment preferably contains, as described above, an acryl resin.

It is preferable that the acryl rein has compatibility to the epoxy resin. Since the acryl resin is compatible with the epoxy resin, formability can be improved. Also, since the acryl resin is compatible with the epoxy resin, the toughness can be easily improved. As a result, the breaking elongation can be increased. Also, the adhesive strength after cured can be improved. Further, high adhesive strength can be maintained.

Here, in the curable adhesive sheet, the state that the acryl resin being compatibilized with the epoxy resin may be confirmed by, for example, observing the surface or the cross-section of the adhesive sheet with a scanning electron microscope (SEM) or a transmission electron microscope (TEM), to confirm that a micron sized island is not formed.

The acryl resin may be a homopolymer of acrylic acid ester monomers that is a mixture component including two kinds or more of the above described homopolymer; and may be a copolymer of two kinds or more acrylic acid ester monomers that is a component including one or more copolymer. Also, the acryl resin may be a mixture component of the homopolymer and the copolymer. Specifically, the acryl resin may be a mixture of the methacrylate polymer and the acrylate polymer, and may be an acrylic acid ester polymer such as acrylate-acrylate, methacrylate-methacrylate, and methacrylate-acrylate. Among them, the acryl resin preferably includes a copolymer of two kinds or more acrylic acid ester monomers.

It should be noted regarding the acryl resin that the "acrylic acid" also includes "methacrylic acid".

Also, hereinafter "a copolymer of two kinds or more acrylic acid ester monomers may be simply referred to as "(meth)acrylic acid ester copolymer".

Examples of the monomer component constituting the (meth)acrylic acid ester copolymer may include the monomer component described in Japanese Patent Application Laid-Open (JP-A) No. 2014-065889. The monomer component may include the later described polar group. Examples of the (meth)acrylic acid ester copolymer may include an ethyl acrylate-butyl acrylate-acrylonitrile copolymer, an ethyl acrylate-acrylonitrile copolymer, and a butyl acrylate-acrylonitrile copolymer.

As the (meth) acrylic acid ester copolymer, a block copolymer is preferable, and an acrylic block copolymer such as a methacrylate-acrylate copolymer is further preferable. Examples of the (meth) acrylate constituting the acrylic block copolymer may include methyl acrylate, ethyl acrylate, propyl acrylate, butyl acrylate, lauryl acrylate, 2-ethylhexyl acrylate, cyclohexyl acrylate, and benzyl acrylate.

Specific examples of the methacrylate-acrylate copolymer may include acrylic copolymers such as methyl methacrylate-butyl acrylate-methyl methacrylate (MMA-BA-MMA) copolymers. Note that, MMA-BA-MMA copolymers also include block copolymers of polymethylmethacrylate-polybutylacrylate-polymethylmethacrylate (PMMA-PBA-PMMA).

The acrylic copolymer may not include a polar group, and may be a modified product wherein the polar group is introduced into a part. Since the modified product is easily compatible with an epoxy resin, adhesive strength after cured further improves. Examples of the polar group may include an epoxy group, a hydroxyl group, a carboxyl group, a nitrile group, and an amide group.

Among them, the acrylic resin is preferably a (meth) acrylic acid ester copolymer including a first polymer portion having glass transition temperature (Tg) of 10°C or less, and a second polymer portion having glass transition temperature (Tg) of 20°C or more. Such a (meth) acrylic acid ester copolymer includes a first polymer portion to be a soft segment and a second polymer portion to be a hard segment. By adding such a (meth)acrylic acid ester copolymer, toughness before cured and after cured improves, and thus the breaking elongation can be improved as well as the adhesive strength after cured can be improved.

The expression of the above effect may be estimated as follows. By using an acrylic resin including both of a soft segment and a hard segment, such as the above (meth) acrylic acid ester copolymer, the hard segment contributes to heat resistance, and the soft segment contributes to toughness or flexibility. Thus, an adhesive sheet having good heat resistance, toughness, and flexibility may be obtained. Thereby, it is considered that the breaking elongation increases and excellent adhesiveness can be obtained.

At least one of the first polymer portion and the second polymer portion included in the above (meth) acrylic acid ester copolymer has compatibility with the epoxy resin. When the first polymer portion has compatibility with the epoxy resin, flexibility may be increased. Also, when the second polymer portion has compatibility with the epoxy resin, it is possible to enhance the cohesiveness and toughness.

When one of the first polymer portion and the second polymer portion has no compatibility with the epoxy resin, the (meth) acrylic acid ester copolymer includes a compatible site that is a polymer portion compatible with the epoxy resin and an incompatible site that is a polymer portion not compatible with the epoxy resin. In this case, when the above (meth) acrylic acid ester copolymer is added to the adhesive composition, the compatible site is compatibilized with the epoxy resin, and the incompatible site is not compatibilized with the epoxy resin, so that fine phase separation occurs. As the result, a fine sea-island structure is developed. The sea-island structure varies depending on the type of the (meth) acrylic acid ester copolymer, the compatibility of the first polymer portion and the second polymer portion included in the (meth) acrylic acid ester copolymer, and the existence or non-existence of modification by introducing a polar group. Examples thereof may include a sea-island structure wherein a cured product of the epoxy resin and a compatible site of the (meth) acrylic acid ester copolymer are seas, and a non-compatible site of the (meth) acrylic acid ester copolymer is an island; a sea-island structure wherein a non-compatible site of the (meth) acrylic acid ester copolymer is a sea, and a cured product of the epoxy resin and a compatible site of the (meth) acrylic acid ester copolymer are islands; and a sea-island structure wherein the (meth) acrylic acid ester copolymer is a sea, and a cured product of the epoxy resin is an island. By having such a sea-island structure, it is possible to easily disperse the stress, so that it is possible to avoid interfacial breakage and to obtain excellent adhesiveness after cured.

Among the above, the (meth) acrylic acid ester copolymer is preferably a block copolymer, and particularly preferably an A-B-A block copolymer including a polymer block A as a compatible site and a polymer block B as a non-compatible site. Further, it is preferable to be a A-B-A block copolymer wherein the first polymer portion is a non-compatible site and the second polymer portion is a compatible site, and the first polymer portion is a polymer block B and the second polymer portion is a polymer block A. By using such an A-B-A block copolymer as an acrylic resin, the island portion may be decreased in the sea-island structure wherein a cured product of the epoxy resin and a compatible site of the (meth) acrylic acid ester copolymer are seas, and a non-compatible site of the (meth) acrylic acid ester copolymer is an island. Also, the sea portion may be decreased in the case of the sea-island structure wherein a non-compatible site of the (meth) acrylic acid ester copolymer is a sea, a cured product of the epoxy resin, and a compatible site of the (meth) acrylic acid ester copolymer are islands; or in the case of the sea-island structure wherein the (meth) acrylic acid ester copolymer is a sea and a cured product of the epoxy resin is an island. Thus, after cured, it appears to have a state the epoxy resin and the acryl resin are compatibilized. By having such an appearance of the soluble state, it is possible to further easily disperse the stress, so that it is possible to avoid interfacial breakage and to maintain excellent adhesive strength.

Further, the above (meth) acrylic acid ester copolymer may be a modified product obtained by introducing the above mentioned polar group into a part of the first polymer portion or the second polymer portion. The compatibility with the epoxy resin improves.

The Tg of the first polymer portion included in the above (meth) acrylic acid ester copolymer is 10°C or less, may be -150°C or more and 10°C or less, may be -130°C or more and 0°C or less, and may be -110°C or more and -10°C or less.

Incidentally, the Tg of the first polymer portion may be determined by calculating according to the following formula based on Tg (K) of each homopolymer described in "POLYMERHANDBOOK 3rd Edition" (issued by John Wiley & Sons, Ink.).

$$1/Tg\ (K)\ =\ W_1/Tg_1\ +\ W_2/Tg_2\ +\ \cdots\ +\ W_n/Tg_n$$

$W_n$; mass fraction of each monomer

$Tg_n$; Tg (K) of the homopolymer of each monomer and publicly available listed values such as those in the Polymer Handbook (3rd Ed., J. Brandrup and E. H. Immergut, WILEY INTERSCIENCE) may be used. The same applies to Tg of the second polymer portion described later.

The first polymer portion included in the above (meth) acrylic acid ester copolymer may be a homopolymer, and may be a copolymer; among them, a homopolymer is preferable. The monomer component and the polymer component constituting the first polymer portion may be any monomer component and a polymer component capable of obtaining a first polymer portion with Tg in a predetermined range, and examples thereof may include acrylic acid ester monomers such as acrylic acid butyl, acrylic acid 2-ethylhexyl, acrylic acid isononyl, and acrylic acid methyl; other monomers such as vinyl acetate, acetal, and urethane; a polar group containing monomer including the above described polar group; and copolymers such as EVA.

The Tg of the second polymer portion included in the (meth) acrylic acid ester copolymer is 20°C or more, may be 20°C or more and 150°C or less, may be 30°C or more and 150°C or less, and may be 40°C or more and 150°C or less.

Also, the second polymer portion included in the (meth) acrylic acid ester copolymer may be a homopolymer, may be a copolymer; among them, a homopolymer is preferable. The monomer component constituting the second polymer portion may be any monomer component capable of obtaining a second polymer portion with Tg in a predetermined range, and examples thereof may include acrylic acid ester monomers such as methyl methacrylate; other monomers such as acrylamide, styrene, vinyl chloride, amide, acrylonitrile, cellulose acetate, phenol, urethane, vinylidene chloride, methylene chloride, and methacrylonitrile; and a polar group containing monomers including the above described polar group.

Specific examples of the (meth) acrylic acid ester copolymer including the first polymer portion and the second polymer portion described above may include the above described MMA-BA-MMA copolymers.

In the MMA-BA-MMA copolymer, the ratio of the MMA block and the BA block is appropriately set. When the ratio of the BA block increases, toughness and flexibility improve. Meanwhile, when the ratio of the MMA block increases, heat resistance improves. From the viewpoint of toughness and heat resistance, the ratio of the MMA block and the BA block in the number of monomer unit is preferably 1 : 1 to 50 : 1.

The content of the acryl resin is, for example, with respect to 100 mass parts of the epoxy resin, preferably 4 mass parts or more and 20 mass parts or less. When the content of the acryl resin is in the above range, the sea-island structure as described above can be developed. Thereby, excellent adhesive strength after cured can be maintained.

(4) Curing agent

The reactions of the epoxy resin, the acryl resin, and the curing agent proceed by heating and the like, and the adhesive agent composition is cured. In the adhesive sheet of the present embodiment, a curing agent is included to promote the curing reaction.

The curing agent is not particularly limited if it is a curing agent generally used in an epoxy resin-based adhesive agent, and examples thereof may include an amine-based curing agent, an acid anhydride-based curing agent, a phenol-based curing agent, and an isocyanate-based curing agent.

Examples of the amine-based curing agent may include aliphatic polyamine, aromatic polyamine, polyamide amine, dicyandiamide (DICY), and organic acid dihydrazide. Examples of the aliphatic polyamine may include diethylenetriamine (DETA), triethylenetetramine (TETA), and methxylylenediamine (MXDA). Examples of the aromatic polyamine may include diaminodiphenylmethane (DDM), m-phenylenediamine (MPDA), and diaminodiphenylsulfone (DDS).

Examples of the acid anhydride-based curing agent may include alicyclic acid anhydride (liquid acid anhydride), and aromatic acid anhydride. Examples of the alicyclic acid anhydride may include hexahydrophthalic anhydride (HHPA), and methyltetrahydrophthalic anhydride (MTHPA). Examples of the aromatic acid anhydride may include trimellitic anhydride (TMA), pyromellitic dianhydride (PMDA), and benzophenone tetracarboxylic dianhydride (BTDA).

Examples of the phenol based curing agent may include phenol resins.

Examples of the isocyanate based curing agent may include blocked isocyanate.

Among them, the amine-based curing agent is preferable, and the dicyandiamide-based curing agent is more preferable.

Also, the curing agent and a curing accelerator may be used in combination. The curing accelerator includes a curing catalyst. Examples of the curing accelerator may include a tertiary amine compound, an amine adduct, an imidazole compound, and a urea compound.

The content of the curing agent is appropriately set depending on the amine value and the acid value of the curing agent. When dicyandiamide is used as the curing agent, the content of the curing agent is, for example, with respect to 100 mass parts of the epoxy resin and the epoxy modified silicone resin, preferably 5 mass parts or more and 30 mass parts or less. When the content of the curing agent is in the above range, heat resistance after cured can be improved, and the deterioration of the adhesive strength after cured due to temperature change can be inhibited. Also, the storage stability (pot life) of the adhesive sheet can be maintained.

(5) Inorganic filler

The adhesive sheet of the present embodiment preferably contains the inorganic filler as described above.

The inorganic filler is not particularly limited if it is an inorganic filler generally used in an adhesive agent composition, and examples thereof may include silica, alumina, titanium oxide, zirconium oxide, magnesium oxide, aluminum nitride, boron nitride, calcium carbonate, magnesium carbonate, barium sulfate, aluminum hydroxide, magnesium hydroxide, aluminum borate, potassium titanate, barium titanate, strontium titanate, calcium titanate, magnesium titanate, bismuth titanate, barium zirconate, calcium zirconate, glass, talc, clay, mica, and carbon.

The shape of the inorganic filler is not particularly limited, and examples thereof may include a spherical shape, a needle shape, a fiber shape, and a plate shape.

Among them, the inorganic filler is preferably silica, and more preferably spherical silica. Dispersibility can be improved.

The silica particles may be subjected to a surface treatment.

There are no particular limitations on the average particle size of the inorganic filler as long as it is the thickness of the adhesive sheet or less.

Incidentally, the average particle size of the inorganic filler is a particle size at integrated value of 50% in the particle size distribution determined by a laser diffraction/scattering method. Also, when measuring the average particle size of the inorganic filler, the inorganic filler is separated by dissolving the adhesive sheet in a solvent. The solvent is not particularly limited as long as the solvent is capable of dissolving the components other than the inorganic filler included in the adhesive sheet, and is appropriately selected depending on the kinds and the like of each component included in the adhesive sheet. For example, a solvent used for an adhesive agent composition used for forming an adhesive sheet may be used. Specific examples may include methyl ethyl ketone, ethyl acetate, and toluene.

The content of the inorganic filler in the adhesive sheet is appropriately set depending on the applications of the adhesive sheet.

(6) Other components

The adhesive sheet of the present embodiment may include additives as required. With additives, for example, processability, heat resistance, weather resistance, mechanical properties, size stability, antioxidative property, slippage, mold releasability, fire resistance, antifungal property, electrical property, and strength can be improved or modified. Examples of the additives may include lubricants, plasticizers, antistatic agents, antiblocking agents, cross-linking agents, antioxidants, ultraviolet absorbers, light stabilizers, coloring agents, organic fillers, and rubber particles. Also, the adhesive sheet of the present embodiment may contain a coupling agent such as silane-based, titanium-based, and aluminum-based, as required. The close adhesiveness of the adhesive sheet with the first member and the second member can be improved by the coupling agent.

(7) Preferable aspects of materials

Preferable aspects of materials of the adhesive sheet are the same as those of the materials of the adhesive sheet of the later described second embodiment.

3. Other points of adhesive sheet

The adhesive sheet of the present embodiment usually includes just the adhesive layer including the above described materials. The thickness of the adhesive sheet (adhesive layer) is appropriately set depending on the applications of the adhesive sheet. The thickness of the adhesive sheet is, for example, 10 $\mu$m or more and 100 $\mu$m or less, may be 15 $\mu$m or more and 80 $\mu$m or less, and may be 20 $\mu$m or more and 60 $\mu$m or less.

Here, the thickness of the adhesive sheet is a value measured from a cross-section in the thickness direction of the adhesive sheet observed with a transmission electron microscope (TEM), a scanning electron microscope (SEM), or a scanning transmission type electron microscope (STEM), and may be an average value of the thicknesses at 10 locations selected at random.

Also, in the present embodiment, a removable member may be included on one surface or both surfaces of the adhesive sheet. Examples of the removable member may include a peeling film and a peeling paper. The peeling film is also referred to as a releasing film, a separate film, and a release film. Also, the peeling paper is also referred to as a releasing paper and a separate paper. Also, the removable member may be a single layer with removability, and may include a releasing layer on one surface or both surfaces of a substrate layer. Examples of the substrate layer may include high-quality paper, coated paper, impregnated paper, and a resin film. The material of the releasing layer is not particularly limited as long as it has releasing property, and examples thereof may include a silicone resin, an organic resin modified silicone compound, a fluorine resin, an amino-alkyd resin, a melamine resin, an acryl resin, and a polyester resin. Any one of an emulsion type, a solvent type, and a solventless type of these resin may be used. Among those, on the point of stable removability and processability, a silicone resin mainly composed of polydimethylsiloxane is preferable.

When the removable member is disposed on both surfaces of the adhesive sheet, the two removable members may be the same and may be different from one another.

It should be noted that when the removable member is disposed on one surface or both surfaces of the adhesive sheet, properties of the adhesive sheet are properties of the adhesive sheet alone excluding the removable member.

Examples of the method for producing the adhesive sheet may include a method in which an adhesive agent composition containing the above described materials is applied on one surface of the removable member, and then dried.

The adhesive agent composition may include a solvent as required.

The method for applying the adhesive agent composition is not particularly limited, and examples of the method for application may include roll coating, reverse roll coating, transfer roll coating, gravure coating, gravure reverse coating, comma coating, rod coating, blade coating, bar coating, wire bar coating, die coating, lip coating, and dip coating.

4. Application

The adhesive sheet of the present embodiment is used for adhering the first member and the second member. On this occasion, the tensile elastic modulus of the main material of the first member is smaller than the tensile elastic modulus of the main material of the second member.

Examples of the combination of the first member and the second member may include a combination of resin members, a combination of a resin member and a metal member, a combination of a resin member and a ceramic member, a combination of a resin member and a glass member, a combination of a ceramic member and a metal member, and a combination of metal members.

The adhesive sheet of the present embodiment is used for, for example, adhering a strain sensor with a measurement target, or for adhering a strain sensor and a strain body. In this case, the first member is a substrate configuring the strain sensor, and the second member is the measurement target or the strain body. Examples of the substrate configuring the strain sensor may include a polyimide-based resin film. Also, examples of the material of the strain body may include an aluminum alloy, stainless steel, and nickel chromium molybdenum steel. Incidentally, the strain sensor may be also referred to as a strain gauge.

For example, when the substrate configuring the strain sensor is the polyimide-based resin film, the tensile elastic modulus of the adhesive sheet after cured may be the tensile elastic modulus of the polyimide-based resin or more.

Also, the adhesive sheet of the present embodiment is used for, for example, adhering an electronic component and a substrate in a component built-in substrate. In this case, the first member may be the electronic component and the second member may be the substrate, or the first member may be the substrate and the second member may be the electronic component. Also, in this case, the curable adhesive layer configured by the cured product of the adhesive sheet is an interlayer insulating layer. Examples of the electronic component may include active components such as a semiconductor, and passive components such as a resistance, an inductance, and a condenser. The substrate is not particularly limited, and examples thereof may include a metal base substrate, a metal core substrate, a copper-clad laminate, a glass epoxy substrate, a metal substrate such as a metal foil and a metal plate, and a resin substrate. Examples of the metal configuring the substrate may include copper, aluminum, iron, and stainless steel (SUS).

For example, when the substrate configuring the component built-in substrate is the glass epoxy substrate, the tensile elastic modulus of the adhesive sheet after cured may be the tensile elastic modulus of glass epoxy or more. Also, when the substrate configuring the component built-in substrate is the polyimide resin substrate, the tensile elastic modulus of the adhesive sheet after cured may be the tensile elastic modulus of the polyimide-based resin or more. Also, when the substrate configuring the component built-in substrate is the polyester resin substrate, the tensile elastic modulus of the adhesive sheet after cured may be the tensile elastic modulus of the polyester resin or more.

II. Second embodiment of adhesive sheet

The second embodiment of the adhesive sheet in the present disclosure is an adhesive sheet to be used for adhering a first member and a second member, wherein a tensile elastic modulus of a main material of the first member is smaller than a tensile elastic modulus of a main material of the second member; the main material of the first member is a polyimide-based resin; the adhesive sheet contains an epoxy resin, an acryl resin, a curing agent, and an inorganic filler; the epoxy resin includes a bisphenol A-type epoxy resin, and a three functional or more epoxy resin; and a content of the inorganic filler is 30.0 mass% or more and 68.0 mass% or less.

FIG. 1 is a schematic cross-sectional view exemplifying the adhesive sheet of the present embodiment. The adhesive sheet 1 of the present embodiment includes, as exemplified in FIG. 1, usually only an adhesive layer. The adhesive sheet 1 includes a specified composition.

In the present embodiment, in the adhesive sheet to be used for adhering a first member and a second member, when the tensile elastic modulus of the main material of the first member is smaller than the tensile elastic modulus of the main material of the second member, the main material of the first member is the polyimide-based resin, and the content of the inorganic filler is in the specified range, the rigidity of the adhesive sheet after cured can be improved. As a result, in a structure including a curable adhesive layer configured by a cured product of the adhesive sheet between the first member and the second member, when a strain occurs in the curable adhesive layer due to outer force and temperature change, the strain in the curable adhesive layer can be reduced. Therefore, positional shifting of the first member with respect to the second member caused by the strain in the curable adhesive layer can be inhibited.

Also, in the present embodiment, in the above case, when the content of the inorganic filler is in the specified range, and the three functional or more epoxy resin is included, the adhesive strength of the adhesive sheet after cured can be improved.

Also, in the present embodiment, the bisphenol A-type epoxy resin with rigid skeleton, and the three functional or more epoxy resin are included, and thus heat resistance after cured can be improved.

Also, in the present embodiment, the acryl resin is included, and thus formability can be improved. Further, elongation can also be improved. As a result, processability improves, and thus generation of crack or breakage at the time of, for example, cutting the adhesive sheet, can be inhibited.

Each constitution of the adhesive sheet of the present embodiment will be hereinafter described.

1. Materials of adhesive sheet

The adhesive sheet of the present embodiment contains an epoxy resin, an acryl resin, a curing agent, and an inorganic filler, the epoxy resin includes a bisphenol A-type epoxy resin, and a three functional or more epoxy resin, and a content of the inorganic filler is in a specified range.

(1) Epoxy resin

In the present embodiment, the epoxy resin includes a bisphenol A-type epoxy resin, and a three functional or more epoxy resin.

Also, the epoxy resin preferably further contains a phenol novolac-type epoxy resin.

The bisphenol A-type epoxy resin, the three functional or more epoxy resin, and the phenol novolac-type epoxy resin are the same as the bisphenol A-type epoxy resin, the three functional or more epoxy resin, and the phenol novolac-type epoxy resin in the first embodiment above.

(2) Epoxy modified silicone resin

The adhesive sheet of the present embodiment may contain an epoxy modified silicone resin. When the epoxy modified silicone resin is included, water resistance can be improved. Also, both heat resistance and flexibility (toughness) can be achieved.

The epoxy modified silicone resin is the same as the epoxy modified silicone resin in the first embodiment above.

(3) Acryl resin

The acryl resin is the same as the acryl resin in the first embodiment above.

(4) Curing agent

The curing agent is the same as the curing agent in the first embodiment above.

(5) Inorganic filler

The inorganic filler is the same as the inorganic filler in the first embodiment above.

The content of the inorganic filler in the adhesive sheet is 30.0 mass% or more, preferably 40 mass% or more, and more preferably 50 mass% or more. When the content of the inorganic filler is in the above range, the tensile elastic modulus after cured can be improved. Also, the content of the inorganic filler in the adhesive sheet is 68.0 mass% or less, preferably 65 mass% or less, and more preferably 60 mass% or less. When the content of the inorganic filler is in the above range, the adhesive strength after cured can be improved. Also, when the content of the inorganic filler is much, although rigidity improves, flexibility is degraded. When the content of the inorganic filler is in the above range, flexibility can be prevented from being too low. As a result, generation of a crack is inhibited, and handling improves.

Here, the content of the inorganic filler in the adhesive sheet is measured by a thermogravimetric-differential thermal simultaneous analysis (TG-DTA). In specific, with a thermogravimetric-differential thermal simultaneous analyzer (TG-DTA), temperature is raised from a room temperature until 600°C under a nitrogen atmosphere and at a temperature rising speed of 10°C/min, and then 600°C is kept for 3 hours. Then, a value of the weight of the sample (adhesive sheet) after heating expressed as a percentage with respect to the weight before heating is regarded as the content of the inorganic filler. As the thermogravimetric-differential thermal simultaneous analyzer, for example, Thermo plus TG8120 from Rigaku Corporation is used.

(6) Other components

The other components are the same as the other components in the first embodiment above.

**2.** Properties of adhesive sheet and other points

The adhesive sheet of the present embodiment preferably includes the properties of the adhesive sheet of the first embodiment above.

In the adhesive sheet of the present embodiment, after curing, when a T-shape peeling test is performed by using a polyimide-based resin film as an adherend, the peeling is preferably caused by a material breakage of the polyimide-based resin film. Thereby, the adhesiveness of the first member containing the polyimide-based resin as a main material, with the adhesive sheet after cured, can be improved.

In the above case, the peeling adhesive strength of the adhesive sheet of the present embodiment after cured is, for example, preferably 20N/25 mm or more, more preferably 25N/25 mm or more, and further preferably 30N/25 mm or more. When the peeling adhesive strength after cured is in the above range, the adhesiveness of the first member containing the polyimide-based resin as a main material with the adhesive sheet after cured can be improved.

Here, the T-shape peeling test is performed in accordance with JIS K6854-3:1999. As the adherend, a polyimide-based resin film ("GF500H" from DU PONT-TORAY CO.,LTD.) having a thickness of 0.75 mm, and a size of 210 mm * 297 mm is used. Also, as a tensile tester, for example, "RTF1150H" from A&D Company, Limited is used. Specific measurement conditions are shown below.

<Measurement conditions>

- Test piece: 170 mm length, 25 mm width
- Tensile speed: 10 mm/min
- Temperature: 23°C
- Humidity: 50%RH

Examples of the method for controlling the peeling adhesive strength of the adhesive sheet after cured may include a method of including an acryl resin, and a method of including rubber particles. The acryl resin and the rubber particles can increase the peeling adhesive strength of the adhesive sheet after cured.

The other points of the adhesive sheet of the present embodiment are the same as the other points of the adhesive sheet of the first embodiment above.

3. Application

The adhesive sheet of the present embodiment is used for adhering the first member and the second member. On this occasion, the tensile elastic modulus of the main material of the first member is smaller than the tensile elastic modulus of the main material of the second member, and the main material of the first member is the polyimide-based resin.

Examples of the combination of the first member and the second member may include a combination of resin members, a combination of a resin member and a metal member, a combination of a resin member and a ceramic member, and a combination of a resin member and a glass member.

The adhesive sheet of the present embodiment is used for, for example, adhering a strain sensor and a measurement target, or for adhering a strain sensor and a strain body. In this case, the first member is the substrate configuring the strain sensor, and the second member is the measurement target or the strain body. The strain sensor is in the same contents as the strain sensor described in the section of the first embodiment above.

Also, the adhesive sheet of the present embodiment is used for, for example, adhering an electronic component and a substrate in a component built-in substrate. In this case, the first member is the substrate, and the second member is the electronic component. Also, in this case, the curable adhesive layer configured by the cured product of the adhesive sheet is an interlayer insulating layer. The component built-in substrate is in the same contents as the component built-in substrate described in the section of the first embodiment above.

III. Third embodiment of the adhesive sheet

The third embodiment of the adhesive sheet in the present disclosure is an adhesive sheet of which tensile elastic modulus after cured is 3.5 GPa or more, and a tensile shearing adhesive strength of the adhesive sheet after cured is 10 MPa or more.

FIG. 1 is a schematic cross-sectional view exemplifying the adhesive sheet of the present embodiment. The adhesive sheet 1 of the present embodiment includes, as exemplified in FIG. 1, usually only an adhesive layer. The adhesive sheet 1 includes specified properties.

In the present embodiment, the tensile elastic modulus of the adhesive sheet after cured is 3.5 GPa or more. When compared to a tensile elastic modulus of general resins, it can be said that the tensile elastic modulus of the adhesive sheet after cured is comparatively large. Thus, when the first member is a resin member, and the adhesive sheet is used for adhering the first member and the second member, the tensile elastic modulus of the adhesive sheet after cured is the specified value or more, and thereby, the rigidity of the adhesive sheet after cured can be comparatively improved. Therefore, in a structure including a curable adhesive layer configured by a cured product of the adhesive sheet between the first member and the second member wherein the first member is the resin member, the strain occurred in the curable adhesive layer due to outer force and temperature change can be reduced. Thereby, occurrence of positional shifting of the first member with respect to the second member due to the strain in the curable adhesive layer can be inhibited.

Here, as an example of measures to improve the rigidity of the adhesive sheet after cured, adding an inorganic filler is considered. However, the addition of the inorganic filler tends to degrade the adhesive strength after cured.

In contrast, in the present embodiment, the tensile shearing adhesive strength of the adhesive sheet after cured is the specified value or more. Thus, the rigidity of the adhesive sheet after cured can be improved as well as the adhesive strength after cured can be improved.

Each constitution of the adhesive sheet of the present embodiment will be hereinafter described.

1. Properties of adhesive sheet

(1) Tensile elastic modulus after cured

The tensile elastic modulus of the adhesive sheet of the present embodiment after cured is 3.5 GPa or more, preferably 4.0 GPa or more, and more preferably 5.0 GPa or more. Also, the upper limit of the tensile elastic modulus of the adhesive sheet of the present embodiment after cured is not particularly limited, but for example, it is 30 GPa or less, may be 20 GPa or less, and may be 10 GPa or less. In specific, the tensile elastic modulus of the adhesive sheet of the present embodiment after cured is preferably 3.5 GPa or more and 30 GPa or less, more preferably 4.0 GPa or more and 20 GPa or less, and further preferably 5.0 GPa or more and 10 GPa or less.

The adhesive sheet of the present embodiment preferably has the tensile elastic modulus of the adhesive sheet of the first embodiment after cured.

(2) Tensile shearing adhesive strength after cured

The tensile shearing adhesive strength of the adhesive sheet of the present embodiment after cured is the same as the tensile shearing adhesive strength of the adhesive sheet of the first embodiment after cured.

(3) Breaking elongation

The adhesive sheet of the present embodiment preferably has the breaking elongation of the adhesive sheet of the first embodiment above.

(4) Peak value of loss coefficient (tan$\delta$) after cured

The adhesive sheet of the present embodiment preferably has the peak value of the loss coefficient (tan$\delta$) of the adhesive sheet of the first embodiment after cured.

2. Material of adhesive sheet

The materials of the adhesive sheet of the present embodiment are the same as the materials of the adhesive sheet of the first embodiment above.

3. Other points of adhesive sheet

The other points of the adhesive sheet of the present embodiment are the same as the other points of the adhesive sheet of the first embodiment above.

4. Application

The adhesive sheet of the present embodiment is used for adhering the first member and the second member. On this occasion, the first member is a resin member. The tensile elastic modulus of the main material of the first member is preferably smaller than the tensile elastic modulus of the main material of the second member. Above all, the main material of the first member is preferably a polyimide-based resin or a polyester resin, and more preferably the polyimide-based resin.

Examples of the combination of the first member and the second member may include a combination of resin members, a combination of a resin member and a metal member, a combination of a resin member and a ceramic member, and a combination of a resin member and a glass member.

The adhesive sheet of the present embodiment is used for, for example, adhering a strain sensor and a measurement target, or for adhering a strain sensor and a strain body. In this case, the first member is the substrate configuring the strain sensor, and the second member is the measurement target or the strain body. The strain sensor is in the same contents as the strain sensor described in the section of the first embodiment above.

Also, the adhesive sheet of the present embodiment is used for adhering an electronic component and a substrate in a component built-in substrate. In this case, the first member is the substrate, and the second member is the electronic component. Also, in this case, the curable adhesive layer configured by the cured product of the adhesive sheet is an interlayer insulating layer. The component built-in substrate is in the same contents as the component built-in substrate described in the section of the first embodiment above.

IV. Fourth embodiment of adhesive sheet

The fourth embodiment of the adhesive sheet in the present disclosure is an adhesive sheet of which breaking elongation is 60% or more, wherein the adhesive sheet contains an epoxy resin, an acryl resin, a curing agent, and an inorganic filler; the epoxy resin includes a bisphenol A-type epoxy resin, and a three functional or more epoxy resin; and a content of the inorganic filler is 30.0 Mass% or more and 68.0 mass% or less.

FIG. 1 is a schematic cross-sectional view exemplifying the adhesive sheet of the present embodiment. The adhesive sheet 1 of the present embodiment includes, as exemplified in FIG. 1, usually only an adhesive layer. The adhesive sheet 1 includes specific properties, and a specific composition.

The inventors of the present disclosure have, as described in Examples later, found out that the rigidity of the adhesive sheet after cured becomes comparatively higher than the rigidity of general resins, when the content of the inorganic filler is in the specified range. Thus, when the first member is the resin member, the adhesive sheet is used for adhering the first member and the second member, and the content of the inorganic filler is in the specified range, the rigidity of the adhesive sheet after cured can be comparatively improved. As a result, in a structure including a curable adhesive layer configured by a cured product of the adhesive sheet between the first member and the second member wherein the first member is the resin member, the strain occurred in the curable adhesive layer due to outer force and temperature change can be reduced. Therefore, occurrence of positional shifting of the first member with respect to the second member due to the strain in the curable adhesive layer can be inhibited.

Also, in the present embodiment, when the content of the inorganic filler is in the specified range, and the three functional or more epoxy resin is included, the adhesive strength of the adhesive sheet after cured can be improved.

Also, in the present embodiment, the bisphenol A-type epoxy resin with rigid skeleton, and the three functional or more epoxy resin are included, and thus heat resistance after cured can be improved.

Also, in the present embodiment, the acryl resin is included, and thus formability can be improved. Further, in the present embodiment, since the acryl resin is included, the elongation can also be improved. Also, in the present embodiment, the breaking elongation of the adhesive sheet is the specified value or more. As a result, processability improves, and thus generation of crack or breakage at the time of, for example, cutting the adhesive sheet, can be inhibited.

Each constitution of the adhesive sheet of the present embodiment will be hereinafter described.

1. Materials of adhesive sheet

The materials of the adhesive sheet of the present embodiment are the same as the materials of the adhesive sheet of the second embodiment above.

2. Properties of adhesive sheet

(1) Breaking elongation

The breaking elongation of the adhesive sheet of the present embodiment is the same as the breaking elongation of the adhesive sheet of the first embodiment above.

(2) Tensile elastic modulus after cured

The tensile elastic modulus of the adhesive sheet of the present embodiment after cured preferably has the tensile elastic modulus of the adhesive sheet of the first embodiment after cured.

(3) Tensile shearing adhesive strength after cured

The tensile shearing adhesive strength of the adhesive sheet of the present embodiment after cured preferably has the tensile shearing adhesive strength of the adhesive sheet of the first embodiment after cured.

(4) Peak value of loss coefficient (tan$\delta$) after cured

The adhesive sheet of the present embodiment preferably has the peak value of the loss coefficient (tan$\delta$) of the adhesive sheet of the first embodiment after cured.

3. Other points of adhesive sheet

The other points of the adhesive sheet of the present embodiment are the same as the other points of the adhesive sheet of the first embodiment above.

4. Application

The applications of the adhesive sheet of the present embodiment are the same as the applications of the adhesive sheet of the third embodiment above.

B. Adhesive agent composition

The adhesive agent composition in the present disclosure is an adhesive agent composition to be used for adhering a first member and a second member, wherein a tensile elastic modulus of the first member is smaller than a tensile elastic modulus of the second member; a main material of the first member is a polyimide-based resin; the adhesive agent composition contains an epoxy resin, acryl resin, a curing agent, and an inorganic filler; the epoxy resin includes a bisphenol A-type epoxy resin, and a three functional or more epoxy resin; and a content of the inorganic filler in a solid content of the adhesive agent composition is 30.0 mass% or more and 68.0 mass% or less.

The adhesive agent composition in the present disclosure exhibits an effect same as that of the adhesive sheet of the second embodiment above.

Each component included in the adhesive agent composition in the present disclosure is the same as each component included in the adhesive sheet of the second embodiment above.

The adhesive agent composition may include a solvent as required.

The adhesive agent composition may be adjusted by mixing each component, and kneading and dispersing, if necessary. The mixing method and the dispersing method are not particularly limited, and common kneading dispersers such as twin roll mills, triple roll mills, pebble mills, trommels, Szegvari attritors, high-speed impeller dispersers, high-speed stone mills, high-speed impact mills, Despar, high-speed mixers, ribbon blenders, cokneaders, intensive mixers, tumblers, blenders, dispersers, homogenizers, and ultrasonic dispersers may be applied. When a plural kinds is used as the epoxy resin, it is preferable to mix and agitate the hard epoxy resin first, and then the curing agent is mixed and agitated, and after diluting with a solvent, a soft epoxy resin is mixed and agitated, and then the acryl resin is mixed and agitated.

The applications of the adhesive agent composition in the present disclosure are the same as the applications of the adhesive sheet of the second embodiment above.

C. Structure

The structure in the present disclosure is a structure including a first member, a second member, and a curable adhesive layer that adheres the first member and the second member, wherein the first member is a resin member; a tensile elastic modulus of the curable adhesive layer is 3.5 GPa or more; and a tensile shearing adhesive strength of the curable adhesive layer is 10 MPa or more.

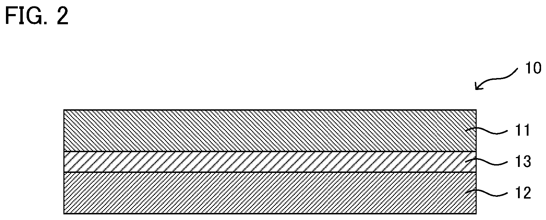

FIG. 2 is a schematic cross-sectional view exemplifying a structure in the present disclosure. As shown in FIG. 2, the structure 10 includes first member 11, second member 12, and curable adhesive layer 13 that adheres the first member 11 and the second member 12. The first member 11 is a resin member. The curable adhesive layer 13 includes specific properties.

In the present disclosure, the tensile elastic modulus of the curable adhesive layer is 3.5 GPa or more. When compared to a tensile elastic modulus of common resins, it can be said that the tensile elastic modulus of the curable adhesive layer is comparatively large. For this reason, when the first member is a resin member, and the tensile elastic modulus of the curable adhesive layer is the specified value or more, the rigidity of the curable adhesive layer can be comparatively improved. Thus, when the first member is a resin member, strain occurred in the curable adhesive layer due to outer force and temperature change can be reduced. As a result, occurrence of positional shifting of the first member with respect to the second member due to the strain in the curable adhesive layer can be inhibited.

Here, as a measure to improve the rigidity of the curable adhesive layer, for example, adding an inorganic filler is considered. However, adding the inorganic filler tends to degrade the adhesive strength.

In contrast, in the present disclosure, the tensile shearing adhesive strength of the curable adhesive layer is the specified value or more. Thus, the adhesive strength can be improved while improving the curable adhesive layer.

Hereinafter, each constitution of the structure in the present disclosure will be described.

1. Curable adhesive layer

In the present disclosure, the first member and the second member are adhered by the curable adhesive layer.

(1) Properties of curable adhesive layer

(a) Tensile elastic modulus

The tensile elastic modulus of the curable adhesive layer in the present disclosure is the same as the tensile elastic modulus of the adhesive sheet of the third embodiment after cured.

On the occasion of measuring the tensile elastic modulus of the curable adhesive layer, a curable adhesive layer before cured is prepared. For example, when the curable adhesive layer before cured is already known, that curable adhesive layer before cured is used. Also, when the adhesive agent composition or the composition thereof used for the curable adhesive layer is already known, that adhesive agent composition is used, or the adhesive agent composition with that composition is prepared, and the curable adhesive layer before cured is formed. On this occasion, the thickness of the curable adhesive layer before cured is the thickness of the curable adhesive layer.

(b) Tensile shearing adhesive strength

The tensile shearing adhesive strength of the curable adhesive layer in the present disclosure is the same as the tensile shearing adhesive strength of the adhesive sheet of the third embodiment after cured.

On the occasion of measuring the tensile shearing adhesive strength of the curable adhesive layer, the curable adhesive layer before cured is prepared. The curable adhesive layer before cured is as described above.

(2) Materials of curable adhesive layer

The curable adhesive layer in the present disclosure is preferably a cured product of the above described adhesive sheet, or preferably contains the cured product of the above described adhesive agent composition.

(3) Other points of curable adhesive layer

The thickness of the curable adhesive layer in the present disclosure is the same as the thickness of the adhesive sheet of the first embodiment above.

2. First member and second member

In the present disclosure, the first member is a resin member. The tensile elastic modulus of the main material of the first member is preferably smaller than the tensile elastic modulus of the main material of the second member. Above all, the main material of the first member is preferably a polyimide-based resin or a polyester resin, and more preferably the polyimide-based resin.

Examples of the combination of the first member and the second member may include a combination of resin members, a combination of a resin member and a metal member, a combination of a resin member and a ceramic member, and a combination of a resin member and a glass member.

The structure in the present disclosure is, for example, a strain sensor. Specific examples thereof may include the one in which a strain sensor and a measurement target are adhered by the curable adhesive layer, or the one in which a strain sensor and a strain body are adhered by the curable adhesive layer. In this case, the first member is the substrate configuring the strain sensor, and the second member is the measurement target or the strain body. The strain sensor is in the same contents as the strain sensor described in the section of the adhesive sheet described above.

Also, the structure in the present disclosure is, for example, a component built-in substrate. In this case, the first member is the substrate, and the second member is the electronic component. Also, in this case, the curable adhesive layer is an interlayer insulating layer. The component built-in substrate is in the same contents as the component built-in substrate described in the section of the first embodiment above.

Incidentally, the present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

Examples

<Materials>

Below materials were used.

- Bisphenol A-type epoxy resin 1: liquid at ordinary temperature, epoxy equivalent: 184 g/eq to 194 g/eq), weight average molecular amount: 370
- Bisphenol A-type epoxy resin 2: solid at ordinary temperature, epoxy equivalent: 450 g/eq to 500 g/eq, number average molecular weight: 900, softening point: 64°C
- Multifunctional epoxy resin 1: high viscosity liquid, epoxy equivalent: 110 g/eq to 130 g/eq, four functional, diaminodiphenyl methane type epoxy resin
- Multifunctional epoxy resin 2: solid at ordinary temperature, epoxy equivalent: 200 g/eq to 220 g/eq, softening point: 70°C, three functional or more, special novolac-type epoxy resin
- Rubber particle master batch: a master batch in which core shell type rubber particles are dispersed in a bisphenol A-type epoxy resin. The shell part is polymethacrylate, and the core part is a butadiene-based rubber. The blending amount of the core shell particles: 33 mass%.
- Naphthalene-type epoxy resin: epoxy equivalent: 170 g/eq, softening point: 95°C, melt viscosity at 150°C: 9.0 Pa·s
- Phenol novolac-type epoxy resin: epoxy equivalent: 160 g/eq, softening point: 65°C, three functional or more
- Epoxy modified silicone resin: (Epoxy equivalent: 160 g/eq, viscosity (25°C): 0.15 Pa·s to 0.3 Pa·s, non-volatile component: 43.0% to 43.7%)
- Acryl resin: PMMA-PBuA-PMMA (partially acrylamide group), Tg: -20°C, 120°C, weight average molecular weight: 150,000
- Curing agent 1: Dicyandiamide, particle size: 10 $\mu$m or less, melting point: 209°C, (DYHARD100SH from Evonik Industries)

- Curing agent 2: novolac-type phenol resin, hydroxyl equivalent: 104 g/eq, softening point: 78°C to 82°C (TD-2131 from DIC)
- Curing catalyst 1: aliphatic dimethylurea (U-CAT 35131N from San-Apro Ltd.)
- Curing catalyst 2: epoxy resin amine adduct (AJICURE™ MY-H from Ajinomoto Fine-Techno Co.,Inc.)
- Inorganic filler 1: silica particles, average particle size: 0.5 μm
- Inorganic filler 2: potassium titanate fiber, fiber diameter: 0.3 μm to 0.6 μm, fiber length: 10 μm to 20 μm
- Inorganic filler 3: carbon milled fiber, fiber diameter: 5 μm to 15 μm, fiber length: 30 μm to 150 μm
- Coupling agent: 3-glycidoxypropyltrimethoxysilane
- Antioxidant: hindered phenol-based antioxidant
- Solvent: methanol, methyl ethyl ketone, toluene

[Examples 1 to 5 and Comparative Examples 1 to 6]

Firstly, an adhesive agent composition having a composition shown in Table 1 below was prepared. Then, on a releasing processed surface of a releasing film ("SP-PET-O3-BU" from Mitsui Chemicals Tohcello. Inc., 38 μm thick), the adhesive agent composition was applied so that the thickness after dried was 50 μm, and thereby an adhesive sheet was formed. Sequentially, on a surface of the adhesive sheet opposing to the releasing film, a releasing processed surface of a releasing film ("SP-PET-O3-BU" from Mitsui Chemicals Tohcello. Inc., 38 μm thick) was laminated. Thereby, an adhesive sheet including releasing films on both surfaces was obtained.

[Evaluation]

(1) Properties before cured

(1-1) Processability

The adhesive sheet was cut by a cutter ("215B" from OLFA CORPORATION). Then the presence or absence of a crack in the cut part was visually confirmed. The processability was evaluated according to the following criteria.

A: No crack
B: There is a crack, but the crack part is not separated.
C: There is a crack, and the crack part is separated.

(1-2) Breaking elongation

As the tensile tester, "Tensilon RTF1150" from A & D Company Limited was used, and the breaking elongation of the adhesive sheet was measured in the below conditions in accordance with JIS K7127:1999.

<Measurement conditions>

- Test piece: a rectangle having 15 mm width, 150 mm length
- Distance between chucks: 100 mm
- Tensile speed: 100 mm/min
- Temperature: 23°C
- Humidity: 50%RH

(2) Properties after cured

(2-1) Tensile elastic modulus

Firstly, the adhesive sheet was heated at 120°C for 2 hours and cured. Next, as the tensile tester, "Tensilon RTF1150" from A & D Company Limited was used, and the tensile elastic modulus of the adhesive sheet after cured was measured in the below conditions in accordance with JIS K7127:1999.

<Measurement conditions>

- Test piece: a rectangle having 15 mm width, 150 mm length
- Distance between chucks: 100 mm
- Tensile speed: 1 mm/min
- Temperature: 23°C
- Humidity: 50%RH

(2-2) Tensile shearing adhesive strength

As the tensile tester, "Tensilon RTF1350 " from A & D Company, Ltd. was used, and the tensile shearing adhesive strength of the adhesive sheet after cured was measured in the below conditions in accordance with JIS K6850:1999. As the adherend, a cold rolled steel sheet (SPCC-SD) with surface finish D having a thickness of 16 mm, a size of 100 mm * 25 mm, and standard refining was used. Also, the curing conditions of the adhesive sheet were 120°C, 2 hours and 0.1 MPa.

<Measurement conditions>

- Test piece: 187.5 mm length, 25 mm width
- Tensile speed: 10 mm/min
- Temperature: 23°C
- Humidity: 50%RH

(2-3) Peeling adhesive strength

As the tensile tester, "Tensilon RTF1150 " from A & D Company, Ltd. was used, and the peeling adhesive strength (T-shape peeling) of the adhesive sheet after cured was measured in the below conditions in accordance with JIS K6854-3:1999. As the adherend, a polyimide-based resin film ("GF500H" from DU PONT-TORAY CO.,LTD.) having a thickness of 0.75 mm, and a size of 210 mm * 297 mm was used. Also, the curing conditions of the adhesive sheet were 120°C, 2 hours and 0.1 MPa. Also, regarding the peeling, interfacial breakage, material breakage, aggregation breakage were visually confirmed.

<Measurement conditions>

- Test piece: 170 mm length, 25 mm width
- Tensile speed: 10 mm/min
- Temperature: 23°C
- Humidity: 50%RH

(2-4) Peak value of tan$\delta$

Firstly, the adhesive sheet was heated at 120°C for 2 hours and cured. Next, as a dynamic viscoelasticity measurement device, "RSA-III" from TA Instruments was used, and the tan$\delta$ of the adhesive sheet after cured was measured with the below conditions by a dynamic viscoelasticity measurement (DMA) in accordance with JIS K7244-1:1998. Incidentally, when there was a plurality of peaks of the tan$\delta$, the tan$\delta$ at higher temperature was regarded as the peak value.

<Measurement conditions>

- Attachment mode: compression mode
- Frequency: 1 Hz

- Temperature: -50°C to 300°C
- Temperature rising speed: 5°C/min

(3) Positional shifting of sensor

One releasing film was peeled off from the adhesive sheet. Next, with a laminator ("GL835PRO" from ACCO BRANDS JAPAN K.K.), on a roughen surface of a copper foil ("RCF-T5B-35μ", 35 μm thick from FUKUDA METAL FOIL & POWDER CO., LTD.), a surface of the adhesive sheet opposing to the other releasing film was adhered. Sequentially, the product was cut in 3 cm * 5 cm. Next, the other releasing film was peeled off from the adhesive sheet. Next, a strain sensor ("QFLGB-02-11" from Tokyo Measuring Instruments Laboratory Co., Ltd.) was mounted on the adhesive sheet. Sequentially, the adhesive sheet was heated at 120°C for 2 hours and cured. With an image measurement device ("NEXIV VMR-H3030" from Nikon Corporation), an arbitrary point was determined as the origin, and a position of the strain sensor from the origin was measured. Then, 0°C was kept for 1 hour, and further 100°C was kept for 1 hour, and thereafter an amount of the positional shifting of the strain sensor was calculated. The positional shifting of the sensor was evaluated according to the following criteria.

Absent: There was no positional shifting.
Present: Positional shifting occurred.

[Table 1]

| | | Ex. 1 | Ex. 2 | Ex. 3 | Ex. 4 | Ex. 5 | Comp.Ex.1 | Comp.Ex.2 | Comp.Ex.3 | Comp.Ex.4 | Comp.Ex.5 | Comp.Ex.6 |
|---|---|---|---|---|---|---|---|---|---|---|---|---|
| Composition | Bisphenol A-type epoxy resin 1 | - | - | - | 10.9 | - | 10.9 | 10.9 | - | - | - | - |
| | Bisphenol A-type epoxy resin 2 | 46.3 | 46.3 | 46.3 | - | 18.5 | - | - | 18.5 | 18.5 | 46.3 | 46.3 |
| | Multifunctional epoxy resin 1 | 24 | 24 | 24 | 28.3 | 24 | 28.3 | 28.3 | 24 | 24 | - | - |
| | Multifunctional epoxy resin 2 | - | - | - | 5.4 | - | 5.4 | 5.4 | - | - | - | - |
| | Rubber particle master batch | 6 | 6 | 6 | - | 24 | - | - | 24 | 24 | 6 | 6 |
| | Epoxy modified silicone resin | 16.4 | 16.4 | 16.4 | 8.7 | 7.4 | 8.7 | 8.7 | 7.4 | 7.4 | 16.4 | 16.4 |
| | Naphthalene-type epoxy resin | - | - | - | - | 8 | - | - | 8 | 8 | - | - |
| | Phenol novolac-type epoxy resin | 12 | 12 | 12 | - | - | - | - | - | - | - | - |
| | Acryl resin | 11.1 | 11.1 | 11.1 | 17.4 | 11.1 | - | 17.4 | 11.1 | 11.1 | 11.1 | 11.1 |
| | Coupling agent | 0.7 | 0.7 | 0.7 | 0.9 | 0.7 | 0.9 | 0.9 | 0.7 | 0.7 | 0.7 | 0.7 |
| | Antioxidant | - | - | - | 2.2 | - | 2.2 | 2.2 | - | - | - | - |
| | Curing agent 1 | 5.7 | 5.7 | 5.7 | 6.1 | 5.8 | 6.1 | 6.1 | 5.8 | 5.8 | 5.7 | 5.7 |
| | Curing catalyst 1 | 3 | 3 | 3 | - | 3 | - | - | 3 | 3 | 3 | 3 |
| | Curing catalyst 2 | - | - | - | 3.9 | - | 3.9 | 3.9 | - | - | - | - |
| | Curing agent 2 | - | - | - | 5.4 | - | 5.4 | 5.4 | - | - | - | - |
| | Inorganic filler 1 | 60 | 120 | 210 | - | 30 | - | - | 20 | 40 | 120 | 240 |
| | Inorganic filler 2 | - | - | - | - | 30 | - | - | 20 | - | - | - |
| | Inorganic filler 3 | - | - | - | 40 | - | 10.7 | 10.7 | - | - | - | - |
| | Solvent | | | | | | | | | | | |
| | Content of inorganic filler (mass%) | 35.9 | 52.9 | 66.3 | 32.6 | 38.8 | 38.0 | 11.4 | 29.7 | 29.7 | 62.9 | 69.2 |
| Properties | Before cured — Processability | A | A | B | A | A | C | A | A | A | A | C |
| | After cured — Breaking elongation (%) | 240 | 181 | 84 | 223 | 199 | N/A | 321 | 261 | 252 | 93 | 50 |
| | Tensile elastic modulus (GPa)(MD/TD) | 3.8/3.8 | 6.1/5.9 | 6.6/6.6 | 6.2/3.9 | 4.7/3.8 | N/A | 4.5/3.2 | 4.7/3.1 | 3.2/3.1 | 6.2/6.2 | 7.0/7.0 |
| | Peeling adhesive strength (N/25mm) | >20 Material breakage | >20 Material breakage | >20 Material breakage | >20 Material breakage | >20 Material breakage | N/A | >20 Material breakage | >20 Material breakage | >20 Material breakage | 14 Interfacial breakage | 10 Interfacial breakage |
| | Tensile shearing adhesive strength(MPa) | 18 | 15 | 10 | 19 | 21 | N/A | 25 | 21 | 24 | 8 | 8 |
| | Peak value of tanδ(℃) | 156 | 155 | 155 | 161 | 163 | N/A | 163 | 155 | 156 | 103 | 156 |
| | Positional shifting of sensor | Absent | Absent | Absent | Absent | Absent | N/A | Present | Present | Present | Absent | Absent |

In Examples 1 to 5, when the main material of the first member was the polyimide-based resin, since the adhesive sheet included the specified properties, or the specified composition, the processability was excellent, and there was no positional shifting of the sensor. Meanwhile, in Comparative Example 1, since the acryl resin was not included, film formation was not possible, and it was impossible to measure the properties. Also, in Comparative Examples 2 to 4, since the content of the inorganic filler was little, the tensile elastic modulus after cured was low, and the positional shifting of the sensor occurred. Also, in Comparative Example 5, since the three functional or more epoxy resin was not included, the tensile shearing adhesive strength after cured and the peeling adhesive strength after cured were low. Also, in Comparative Example 6, since the content of the inorganic filler was much, the processability was inferior, the breaking elongation was low, and the tensile shearing adhesive strength after cured and the peeling adhesive strength after cured were low.

The present disclosure provides the following inventions.

[1] An adhesive sheet of which tensile elastic modulus after cured is 3.5 GPa or more, and

a tensile shearing adhesive strength of the adhesive sheet after cured is 10 MPa or more.

[2] The adhesive sheet according [1], wherein a breaking elongation of the adhesive sheet is 60% or more.

[3] The adhesive sheet according to [1] or [2], wherein

the adhesive sheet contains an epoxy resin, an acryl resin, a curing agent, and an inorganic filler;
the epoxy resin includes a bisphenol A-type epoxy resin, and a three functional or more epoxy resin; and
a content of the inorganic filler is 30.0 mass% or more and 68.0 mass% or less.

[4] The adhesive sheet according to any one of [1] to [3], used for adhering an electronic component and a substrate in a component built-in substrate.

[5] An adhesive sheet of which breaking elongation is 60% or more, wherein

the adhesive sheet contains an epoxy resin, an acryl resin, a curing agent, and an inorganic filler;
the epoxy resin includes a bisphenol A-type epoxy resin, and a three functional or more epoxy resin; and
a content of the inorganic filler is 30.0 mass% or more and 68.0 mass% or less.

[6] An adhesive sheet to be used for adhering a first member and a second member, wherein

a tensile elastic modulus of the first member is smaller than a tensile elastic modulus of the second member;
a breaking elongation of the adhesive sheet is 60% or more;
a tensile elastic modulus of the adhesive sheet after cured is the tensile elastic modulus of the first member or more; and
a tensile shearing adhesive strength of the adhesive sheet after cured is 10 MPa or more.

[7] The adhesive sheet according to [6], wherein

a main material of the first member is a polyimide-based resin; and
the tensile elastic modulus of the adhesive sheet after cured is 3.5 GPa or more.

[8] The adhesive sheet according to [6] or [7], wherein

the adhesive sheet contains an epoxy resin, an acryl resin, a curing agent, and an inorganic filler;
the epoxy resin includes a bisphenol A-type epoxy resin, and a three functional or more epoxy resin; and
a content of the inorganic filler is 30.0 mass% or more and 68.0 mass% or less.

[9] The adhesive sheet according to any one of [6] to [8], wherein

the adhesive sheet is used for adhering an electronic component and a substrate in a component built-in substrate; and
among the first member and the second member, one is the electronic component and the other is the substrate.

[10] An adhesive sheet to be used for adhering a first member and a second member, wherein

a tensile elastic modulus of the first member is smaller than a tensile elastic modulus of the second member;
a main material of the first member is a polyimide-based resin;
the adhesive sheet contains an epoxy resin, an acryl resin, a curing agent, and an inorganic filler;
the epoxy resin includes a bisphenol A-type epoxy resin, and a three functional or more epoxy resin; and
a content of the inorganic filler is 30.0 mass% or more and 68.0 mass% or less.

[11] The adhesive sheet according to [10], wherein the epoxy resin further includes a phenol novolac-type epoxy resin.

[12] An adhesive agent composition to be used for adhering a first member and a second member, wherein

a tensile elastic modulus of the first member is smaller than a tensile elastic modulus of the second member;
a main material of the first member is a polyimide-based resin;
the adhesive agent composition contains an epoxy resin, an acryl resin, a curing agent, and an inorganic filler;

the epoxy resin includes a bisphenol A-type epoxy resin, and a three functional or more epoxy resin; and
a content of the inorganic filler in a solid content of the adhesive agent composition is 30.0 mass% or more and
68.0 mass% or less.

[13] The adhesive agent composition according to [12], wherein the epoxy resin further includes a phenol novolac-type epoxy resin.
[14] A structure comprising a first member, a second member, and a curable adhesive layer that adheres the first member and the second member, wherein

the first member is a resin member;
a tensile elastic modulus of the curable adhesive layer is 3.5 GPa or more; and
a tensile shearing adhesive strength of the curable adhesive layer is 10 MPa or more.

[15] The structure according to [14], wherein

the curable adhesive layer contains a cured product of an adhesive agent composition containing an epoxy resin,
an acryl resin, a curing agent, and an inorganic filler;
the epoxy resin includes a bisphenol A-type epoxy resin, and a three functional or more epoxy resin; and
a content of the inorganic filler is 30.0 mass% or more and 68.0 mass% or less.

[16] The structure according to [14] or [15], wherein the structure is a component built-in substrate, the first member is a substrate, and the second member is an electronic component.
[17] The structure according to any one of [14] to [16], wherein

a tensile elastic modulus of the first member is smaller than the tensile elastic modulus of the second member; and
a tensile elastic modulus of the curable adhesive layer is the tensile elastic modulus of the first member or more.

[18] The structure according to any one of [14] to [17], wherein a main material of the first member is a polyimide-based resin.

The present disclosure provides the following inventions.

[2-1] An adhesive sheet to be used for adhering a first member and a second member, wherein

a tensile elastic modulus of a main material of the first member is smaller than a tensile elastic modulus of a main material of the second member;
a breaking elongation of the adhesive sheet is 60% or more;
a tensile elastic modulus of the adhesive sheet after cured is the tensile elastic modulus of the main material of the first member or more; and
a tensile shearing adhesive strength of the adhesive sheet after cured is 10 MPa or more.

[2-2] The adhesive sheet according to [2-1], wherein

the main material of the first member is a polyimide-based resin; and
the tensile elastic modulus of the adhesive sheet after cured is 3.5 GPa or more.

[2-3] The adhesive sheet according to [2-1] or [2-2], wherein

the adhesive sheet contains an epoxy resin, an acryl resin, a curing agent, and an inorganic filler;
the epoxy resin includes a bisphenol A-type epoxy resin, and a three functional or more epoxy resin; and
a content of the inorganic filler is 30.0 mass% or more and 68.0 mass% or less.

[2-4] An adhesive sheet to be used for adhering a first member and a second member, wherein

a tensile elastic modulus of a main material of the first member is smaller than a tensile elastic modulus of a main material of the second member;
the main material of the first member is a polyimide-based resin;
the adhesive sheet contains an epoxy resin, an acryl resin, a curing agent, and an inorganic filler;

the epoxy resin includes a bisphenol A-type epoxy resin, and a three functional or more epoxy resin; and
a content of the inorganic filler is 30.0 mass% or more and 68.0 mass% or less.

[2-5] The adhesive sheet according to [2-3] or [2-4], wherein the epoxy resin further includes a phenol novolac-type epoxy resin.
[2-6] An adhesive agent composition to be used for adhering a first member and a second member, wherein

a tensile elastic modulus of a main material of the first member is smaller than a tensile elastic modulus of a main material of the second member;
the main material of the first member is a polyimide-based resin;
the adhesive agent composition contains an epoxy resin, an acryl resin, a curing agent, and an inorganic filler;
the epoxy resin includes a bisphenol A-type epoxy resin, and a three functional or more epoxy resin; and
a content of the inorganic filler in a solid content of the adhesive agent composition is 30.0 mass% or more and 68.0 mass% or less.

[2-7] The adhesive agent composition according to [2-6], wherein the epoxy resin further includes a phenol novolac-type epoxy resin.

Reference Signs List

1    Adhesive sheet
10   Structure
11   First member
12   Second member
13   Curable adhesive layer

**Claims**

1.  An adhesive sheet of which tensile elastic modulus after cured is 3.5 GPa or more, and
    a tensile shearing adhesive strength of the adhesive sheet after cured is 10 MPa or more.

2.  The adhesive sheet according to claim 1, wherein a breaking elongation of the adhesive sheet is 60% or more.

3.  The adhesive sheet according to claim 1 or claim 2, wherein

    the adhesive sheet contains an epoxy resin, an acryl resin, a curing agent, and an inorganic filler;
    the epoxy resin includes a bisphenol A-type epoxy resin, and a three functional or more epoxy resin; and
    a content of the inorganic filler is 30.0 mass% or more and 68.0 mass% or less.

4.  The adhesive sheet according to any one of claim 1 to claim 3, used for adhering an electronic component and a substrate in a component built-in substrate.

5.  An adhesive sheet of which breaking elongation is 60% or more, wherein

    the adhesive sheet contains an epoxy resin, an acryl resin, a curing agent, and an inorganic filler;
    the epoxy resin includes a bisphenol A-type epoxy resin, and a three functional or more epoxy resin; and a content of the inorganic filler is 30.0 mass% or more and 68.0 mass% or less.

6.  An adhesive sheet to be used for adhering a first member and a second member, wherein

    a tensile elastic modulus of the first member is smaller than a tensile elastic modulus of the second member;
    a breaking elongation of the adhesive sheet is 60% or more;
    a tensile elastic modulus of the adhesive sheet after cured is the tensile elastic modulus of the first member or more; and
    a tensile shearing adhesive strength of the adhesive sheet after cured is 10 MPa or more.

7. The adhesive sheet according to claim 6, wherein

   a main material of the first member is a polyimide-based resin; and
   the tensile elastic modulus of the adhesive sheet after cured is 3.5 GPa or more.

8. The adhesive sheet according to claim 6 or claim 7, wherein

   the adhesive sheet contains an epoxy resin, an acryl resin, a curing agent, and an inorganic filler;
   the epoxy resin includes a bisphenol A-type epoxy resin, and a three functional or more epoxy resin; and
   a content of the inorganic filler is 30.0 mass% or more and 68.0 mass% or less.

9. The adhesive sheet according to any one of claim 6 to claim 8, wherein

   the adhesive sheet is used for adhering an electronic component and a substrate in a component built-in substrate; and
   among the first member and the second member, one is the electronic component and the other is the substrate.

10. An adhesive sheet to be used for adhering a first member and a second member, wherein

    a tensile elastic modulus of the first member is smaller than a tensile elastic modulus of the second member;
    a main material of the first member is a polyimide-based resin;
    the adhesive sheet contains an epoxy resin, an acryl resin, a curing agent, and an inorganic filler;
    the epoxy resin includes a bisphenol A-type epoxy resin, and a three functional or more epoxy resin; and
    a content of the inorganic filler is 30.0 mass% or more and 68.0 mass% or less.

11. The adhesive sheet according to claim 10, wherein the epoxy resin further includes a phenol novolac-type epoxy resin.

12. An adhesive agent composition to be used for adhering a first member and a second member, wherein

    a tensile elastic modulus of the first member is smaller than a tensile elastic modulus of the second member;
    a main material of the first member is a polyimide-based resin;
    the adhesive agent composition contains an epoxy resin, an acryl resin, a curing agent, and an inorganic filler;
    the epoxy resin includes a bisphenol A-type epoxy resin, and a three functional or more epoxy resin; and
    a content of the inorganic filler in a solid content of the adhesive agent composition is 30.0 mass% or more and 68.0 mass% or less.

13. The adhesive agent composition according to claim 12, wherein the epoxy resin further includes a phenol novolac-type epoxy resin.

14. A structure comprising a first member, a second member, and c curable adhesive layer that adheres the first member and the second member, wherein

    the first member is a resin member;
    a tensile elastic modulus of the curable adhesive layer is 3.5 GPa or more; and
    a tensile shearing adhesive strength of the curable adhesive layer is 10 MPa or more.

15. The structure according to claim 14, wherein

    the curable adhesive layer contains a cured product of an adhesive agent composition containing an epoxy resin, an acryl resin, a curing agent, and an inorganic filler;
    the epoxy resin includes a bisphenol A-type epoxy resin, and a three functional or more epoxy resin; and
    a content of the inorganic filler is 30.0 mass% or more and 68.0 mass% or less.

16. The structure according to claim 14 or claim 15, wherein the structure is a component built-in substrate, the first member is a substrate, and the second member is an electronic component.

17. The structure according to any one of claim 14 to claim 16, wherein

a tensile elastic modulus of the first member is smaller than the tensile elastic modulus of the second member; and

a tensile elastic modulus of the curable adhesive layer is the tensile elastic modulus of the first member or more.

18. The structure according to any one of claim 14 to claim 17, wherein a main material of the first member is a polyimide-based resin.

FIG. 1

1

FIG. 2

## INTERNATIONAL SEARCH REPORT

| | International application No. |
|---|---|
| | **PCT/JP2023/032263** |

### A. CLASSIFICATION OF SUBJECT MATTER

*C09J 7/30*(2018.01)i; *B32B 27/00*(2006.01)i; *B32B 27/38*(2006.01)i; *C09J 11/04*(2006.01)i; *C09J 11/06*(2006.01)i; *C09J 133/00*(2006.01)i; *C09J 163/02*(2006.01)i; *C09J 163/04*(2006.01)i; *C09J 201/00*(2006.01)i
FI:    C09J7/30; C09J201/00; C09J133/00; C09J11/04; C09J11/06; C09J163/02; B32B27/00 M; B32B27/38; C09J163/04

According to International Patent Classification (IPC) or to both national classification and IPC

### B. FIELDS SEARCHED

Minimum documentation searched (classification system followed by classification symbols)
C09J1/00-201/10; B32B27/00; B32B27/38

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2020/144877 A1 (YOSHIKAWA KOGYO CO., LTD.) 16 July 2020 (2020-07-16) claim 1, paragraphs [0016], [0018], [0021], [0023], table 1, examples 2, 4, 8-9, fig. 1 | 1-3, 5 |
| A | | 4, 6-18 |
| X | JP 2016-79304 A (HITACHI CHEMICAL CO LTD) 16 May 2016 (2016-05-16) claim 1, paragraphs [0053], [0096], table 1, examples 1-7 | 1, 4 |
| A | | 2-3, 5-18 |
| A | JP 6-306140 A (HITACHI CHEMICAL CO LTD) 01 November 1994 (1994-11-01) claim 1, paragraphs [0046]-[0048], example 6 | 1-18 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 October 2023** | **07 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2023/032263** |

| Patent document cited in search report | | | Publication date (day/month/year) | Patent family member(s) | Publication date (day/month/year) |
| --- | --- | --- | --- | --- | --- |
| WO | 2020/144877 | A1 | 16 July 2020 | (Family: none) | |
| JP | 2016-79304 | A | 16 May 2016 | (Family: none) | |
| JP | 6-306140 | A | 01 November 1994 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5888349 B
- JP 6067828 B

- JP 2014065889 A

**Non-patent literature cited in the description**

- POLYMERHANDBOOK. John Wiley & Sons

- **J. BRANDRUP** ; **E. H. IMMERGUT**. Polymer Handbook. WILEY INTERSCIENCE